## Europäisches Patentamt
## European Patent Office
## Office européen des brevets

(11) Veröffentlichungsnummer: **0 163 880 B1**

# EUROPÄISCHE PATENTSCHRIFT

(45) Veröffentlichungstag der Patentschrift: **08.07.92**

(21) Anmeldenummer: **85104711.8**

(22) Anmeldetag: **18.04.85**

(51) Int. Cl.⁵: $G06K \ 19/06$

---

(54) Datenträger mit IC-Baustein und Verfahren zur Herstellung eines derartigen Datenträgers.

---

(30) Priorität: **29.05.84 DE 3420051**

(43) Veröffentlichungstag der Anmeldung:
**11.12.85 Patentblatt 85/50**

(45) Bekanntmachung des Hinweises auf die
Patenterteilung:
**08.07.92 Patentblatt 92/28**

(84) Benannte Vertragsstaaten:
**AT BE CH DE FR GB IT LI LU NL SE**

(56) Entgegenhaltungen:
**DE-A- 2 920 012**
**GB-A- 2 095 175**
**GB-A- 2 100 669**

**PATENT ABSTRACTS OF JAPAN, Band 10,
Nr. 247 (P-490)[2303], 26. August 1986; & JP-
A-61 75 986**

**PATENT ABSTRACTS OF JAPAN, Band 10,
Nr. 260 (P-494)[2316], 5. September 1986; &
JP-A-61 86 885**

(73) Patentinhaber: **GAO Gesellschaft für Automation und Organisation mbH
Euckenstrasse 12
W-8000 München 70(DE)**

(72) Erfinder: **Haghiri-Tehrani, Yahya
Winzererstrasse 98
W-8000 München 4(DE)**
Erfinder: **Hoppe, Joachim
Breisacherstrasse 1
W-8000 München 80(DE)**

(74) Vertreter: **Klunker . Schmitt-Nilson . Hirsch
Winzererstrasse 106
W-8000 München 40(DE)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft einen Datenträger mit einem IC-Baustein zur Verarbeitung elektrischer Signale, bei dem der IC-Baustein im Inneren des Datenträgers angeordnet und über Anschlußleitungen mit Elementen zur Kommunikation mit peripheren Einrichtungen, insbesondere Kontaktflächen, verbunden ist.

In der DE-AS 29 20 012 wird eine Ausweiskarte mit integriertem Schaltkreis beschrieben. Der IC-Baustein ist zusammen mit seinen Kontaktflächen und Anschlußleitungen auf einem separaten Trägerelement angeordnet. Das Trägerelement wird bei der fertiggestellten Karte in einer Aussparung des Karteninletts durch elastische Verbindungselemente gehalten. Die Aussparung der Karte ist in ihrem Umfang größer als das Trägerelement. Durch die elastischen Verbindungselemente ist das Trägerelement in der Kartenaussparung schwimmend gelagert, so daß es sich auch bei sehr starken Biegebelastungen nicht in der Kartenaussparung verkeilt. Durch diese Art der Lagerung werden Biegespannungen der Karte wirkungsvoll vom Trägerelement und damit von den empfindlichen elektrischen Bauteilen, wie dem integriertem Schaltkreis und den Lötstellen, ferngehalten.

Ein weiterer Datenträger mit integriertem Schaltkreis ist in der DE-OS 31 31 216 beschrieben. Der IC-Baustein ist dort zusammen mit seinen Kontaktflächen und Anschlußleitungen ebenfalls auf einem separaten Trägerelement angeordnet. Das Trägerelement ist zum Schutz der elektrischen Bauteile relativ starr ausgebildet, beispielsweise können die Teile in ein steifes Plastikteil eingegossen sein. Das Trägerelement ist mit der Karte über ein Verankerungselement verbunden. Das Verankerungselement ragt über den Rand des Trägerelements hinaus und ist vorzugsweise fest mit diesem verbunden. Der über das Trägerelement überstehende Bereich des Verankerungselements wird zwischen Kartenschichten eingebracht und mit diesen verbunden. Auch durch diese Art der Trägerelement-Befestigung mit der Karte werden Biegebelastungen beim Gebrauch der Karte von den empfindlichen elektrischen Bauteilen ferngehalten.

Der Schutz des IC-Bausteins sowie der Kontaktflächen, Anschlußleitungen und Lötstellen ist bei den beiden oben beschriebenen Datenträgern sehr gut. Da diese Datenträger in der Regel für einen längeren Benutzungszeitraum (mehrere Jahre) funktionsfähig sein sollen, ist auch der technische Aufwand zur Herstellung dieser Datenträger gerechtfertigt.

Für verschiedene Anwendungsfälle kommen aber gerade in jüngster Zeit immer mehr Datenträger zum Einsatz, die nur für einen relativ kurzen Zeitraum Gültigkeit haben sollen. Ein Beispiel eines derartigen Datenträgers stellt die sogenannte Telefonkarte dar, mit der von speziellen Telefonapparaten aus bargeldlos telefoniert werden kann. Der Kunde kauft sich bei einer Ausgabestelle eine Karte mit einem vorgegebenen Wert und damit einer bestimmten Anzahl von Gebühreneinheiten. Bei jedem Telefonat wird eine entsprechende Anzahl von Einheiten elektrisch abgebucht. Sind alle Einheiten verbraucht, ist die Karte ungültig und wird in der Regel weggeworfen.

Für derartige Abbuchungs- bzw. Expire-Karten erscheint der eingangs beschriebene Aufwand zur Einbettung des IC-Bausteins in die Karte zu hoch. Andererseits werden auch von diesen Karten mechanische Flexibilität und eine hohe elektrische Funktionssicherheit gefordert.

Daher liegt der Erfindung die Aufgabe zugrunde, einen Datenträger mit integriertem Schaltkreis vorzuschlagen, bei dem der Schaltkreis und die mit ihm über Zuleitungen verbundenen Kommunikationselemente bzw. Kontaktflächen gegenüber mechanischen Belastungen geschützt sind, dessen Aufbau und Herstellung aber einfach und wirtschaftlich ist.

Die Aufgabe wird erfindungsgemäß durch die im Hauptanspruch angegebenen Merkmale gelöst.

Durch die im Kartenaufbau als Schwächung oder Unterbrechung ausgebildeten Sollbruchstellen in der Nähe des IC-Bausteins, der Anschlußleitungen und der Kontaktflächen (im folgenden IC-Bereich genannt) wird dieser Bereich vom übrigen Kartenbereich mechanisch weitgehend entkoppelt. Durch die Schwächungen bzw. Unterbrechungen im Kartenaufbau zwischem dem IC-Bereich und dem übrigen Kartenbereich ergeben sich Störungen der Homogenität des Kartenmaterials, die die durch Verformung der Karte verursachten Biegespannungen unterbrechen und somit vom IC-Bereich weitgehend fernhalten. Überbelastungen durch beim Gebrauch der Karte auftretende starke Biegungen werden, bevor sie zu einer Beschädigung des IC-Bausteins oder deren Zuleitungen führen, von den Sollbruchstellen "abgefangen", so daß dann zwar eine Beschädigung des Kartenkörpers möglich ist, die elektrische Funktion der Karte aber nicht beeinträchtigt wird.

Die Sollbruchstellen, die durch Schwächungen oder Unterbrechungen die Festigkeit des Kartenaufbaus stören, lassen sich beispielsweise dadurch realisieren, daß der Kartenquerschnitt reduziert wird. Im einfachsten Fall wird hierzu die Karte entlang einer Linie, welche den IC-Bereich vom übrigen Kartenbereich trennt, beispielsweise auch eine Prägung, dünner ausgebildet. Weiterhin kann der Kartenquerschnitt nur lokal reduziert werden, zum Beispiel durch eine Perforation oder eine bzw. mehrere Schnittlinien. Eine weitere Möglichkeit zur Ausbildung von Sollbruchstellen ist der Einbau von Materialien, welche sich nicht bzw. nur in geringem Maß mit dem übrigen Kartenmaterial verbinden oder solche mit geringerer Festigkeit als das restliche Kartenmaterial, welche bei Beanspruchung in sich nachgeben und somit die Biegespannung der Karte vom IC-Bereich fernhalten.

In allen Fällen ist sichergestellt, daß der den IC-Bereich umgebende homogene Kartenaufbau derart unterbrochen oder geschwächt ist, daß auf die Karte wirkende Biegespannungen nicht in vollem Umfang über die Trennlinie hinweg auf den IC-Bereich wirken können.

Die erfindungsgemäße Lösung weist gegenüber den bisher bekannten Karten mehrere Vorteile auf. Die neu vorgeschlagenen Karten zeichnen sich durch einen besonders einfachen Aufbau aus, insbesondere kann auf ein separates Trägerelement verzichtet und der IC-Baustein zusammen mit den Kontaktflächen direkt in der Karte verankert werden.

Wenn der Kartenaufbau durch spezielle Materialien in seiner Homogenität gestört sein soll, können diese Materialien unabhängig von den elektrischen Bauteilen in die Karte eingebaut werden, da die Sollbruchstellen und der IC-Bereich nicht überlappen. Dadurch können sowohl für den Einbau der elektrischen Teile als auch für die Herstellung der Sollbruchstelle die jeweils günstigsten Bedingungen eingestellt werden.

Wird die Homogenität des Kartenaufbaus durch eine Perforation, durch Aussparungen oder ganz einfach durch Schnittlinien unterbrochen, so werden die damit verbundenen Arbeitsgänge üblicherweise im Anschluß an den Einbau des IC-Bausteins in die Karte durchgeführt. Dadurch kann die Karte mit einem der bisher bekannten Verfahren hergestellt werden und unabhängig davon wird die Karte zu einem späteren Zeitpunkt in einem abschließenden Arbeitsgang, der sinnvollerweise mit dem Ausstanzen der Karten aus dem sogenannten "Mehrnutzenbogen" zusammenfällt, mit den Sollbruchstellen versehen.

Alle genannten Verfahren zum Ausbilden von den homogenen Kartenaufbau störenden Sollbruchstellen zeichnen sich durch eine einfache und wirtschaftliche Herstellung aus, wobei aber dennoch ein ausreichender Schutz der empfindlichen elektrischen Bauteile gewährleistet ist.

Sollte die Karte dennoch einmal großen mechanischen Biegebelastungen ausgesetzt werden, so wird bei Überschreiten einer Grenzbelastung die Karte verformt, wobei sich die Sollbruchstelle staucht, dehnt oder aufreißt. Dadurch bleibt die Überbelastung an der Karte erkennbar. Dies bietet den Vorteil, daß z. B. bei Reklamationsfällen auch eine eventuelle mechanische Überbelastung nachweisbar ist.

Weitere Vorteile und Weiterbildungen der Erfindung ergeben sich aus Unteransprüchen sowie den Ausführungsbeispielen, die nachfolgend anhand der Fig. beschrieben werden.

Darin zeigen:

Fig. 1    eine Karte mit eingelagertem IC-Baustein und Kontaktflächen in Aufsicht,

Fig. 2    eine Karte in gewölbtem Zustand in Schnittdarstellung,

Fig. 3    schematische Darstellung der Biegespannungen bei unterschiedlichen Kartenbiegungen,

Fig. 4    die erfindungsgemäße Schwächung des Kartenmaterials zur Unterbrechung der Biegespannungslinien,

Fig. 5 - 7    verschiedene Ausführungsformen der Erfindung.

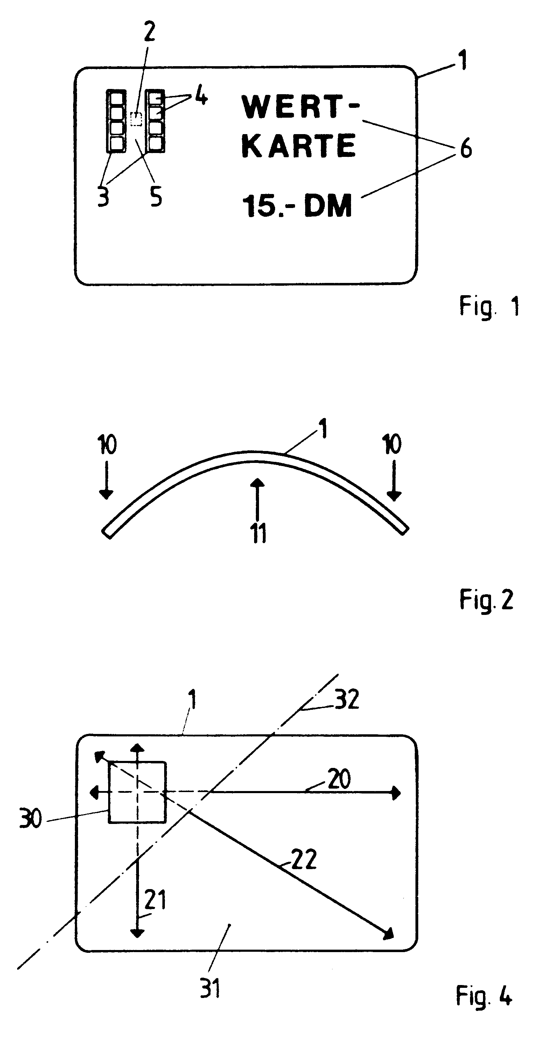

Die Fig. 1 zeigt eine Karte 1 in der Aufsicht. Die Karte enthält einen oder mehrere integrierte Schaltkreise 2, die im gezeigten Beispiel zwischen zwei Kontaktflächenbereichen 3 mit jeweils vier Einzelkontakten 4 angeordnet und über von außen nicht sichtbare Zuleitungen mit den Kontakten verbunden sind. Der IC-Baustein 2 ist vorzugsweise im Inneren der Karte geschützt angeordnet. Die Karte gemäß Fig. 1 kann beispielsweise wie in der Patentanmeldung P 33 38 597 der Anmelderin beschrieben, hergestellt werden.

Üblicherweise ist die Karte mit einem Aufdruck 6 versehen, der u.a. beispielsweise den Wert einer Abbuchungskarte angibt.

Die Karte entspricht den für Kreditkarten vorgesehenen Normen und ist unter anderem, wie in der Norm vorgesehen, flexibel ausgebildet. Da die Karte im täglichen Gebrauch den unterschiedlichsten Belastungen ausgesetzt ist, wobei unterschiedlich gerichtete Kräfte an verschiedenen Stellen der Karte angreifen, können im Karteninnern Kräfte entstehen, die zur Zerstörung des IC-Bausteins, der Anschlußleitungen oder der Lötverbindungen führen.

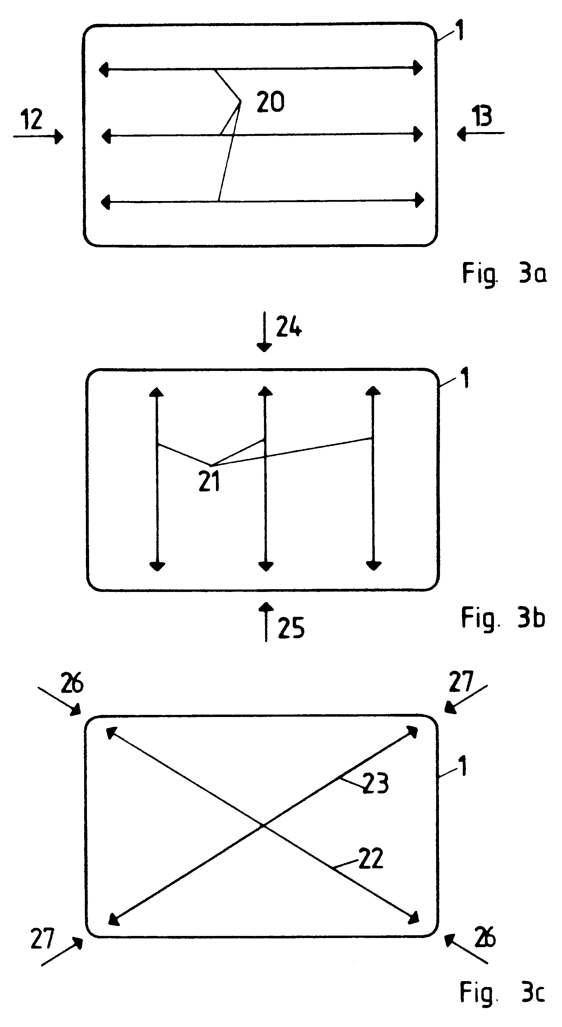

Diese im täglichen Gebrauch auftretenden Belastungen lassen sich zum Teil in Laborversuchen simulieren, indem die Karte, wie beispielsweise in Fig. 2 gezeigt, durch Einwirkung von Kräften 10, 11 verschiedenen Wechselbelastungen ausgesetzt wird. Nachfolgend sollen anhand der Fig. 3 einige Belastungsfälle demonstriert werden, wie sie erfahrungsgemäß beim Gebrauch der Karte auftreten können.

Wenn die Karte, wie in der Fig. 3a gezeigt, durch Kräfte 12, 13, die an den kurzen Seitenkanten angreifen, zusammengedrückt und damit gebogen wird, treten die höchsten Biegespannungen parallel zur langen Seite der Karte auf. In Fig. 3a sind diese Biegespannngen durch drei Linien 20 angedeutet. Dieselbe Biegung und dieselben Biegespannungen treten auch auf, wenn die Karte durch an drei Punkten angreifende unterschiedlich gerichtete Kräfte, wie durch die Pfeile 10, 11 in Fig. 2 dargestellt, aus ihrer ebenen Ruhelage gebogen wird.

Ähnliche Biegebelastungen wie in Fig. 3a ergeben sich, wenn die Karte durch an ihren Längsseiten angreifende Kräfte 24, 25 gebogen wird. Dieser Fall ist in Fig. 3b dargestellt. Die hierbei auftretenden Biegespannungen sind durch die Linien 21 skizziert.

Die in den Fig. 3a und 3b durch die Linien 20, 21 angedeuteten Biegespannungen gelten streng nur, wenn die die Biegung verursachenden Kräfte auf der gesamten Länge der Seitenkanten angreifen. Bei punktartig angreifenden Kräften treten zusätzlich zu den Biegespannungen, die zwischen den Angriffspunkten verlaufen und in Fig. 3a und 3b skizziert sind, seitwärts gerichtete Biegespannungen auf, wodurch die Karte wie eine Sattelfläche gebogen wird. Die Unterschiede in den Kartenbiegungen sind jedoch bei punkt- bzw. linienförmig angreifenden Kräften klein, so daß die schematisierten Darstellungen der Fig. 3a und 3b die Wirklichkeit recht gut wiedergeben.

Eine weitere Art der Biegung besteht darin, die Karte durch Kräfte 26, 27 längs einer Diagonalen zu wölben. Die dabei auftretenden Biegespannungen sind in Fig. 3c skizziert. Je nachdem, an welchen der gegenüberliegenden Ecken die Kräfte angreifen, ergibt sich eine der in der Fig. 3c dargestellten Biegespannungslinien 22, 23. Anstelle des Zusammendrückens gegenüberliegender Ecken ergibt sich ein ähnlicher Biegespannungsverlauf, wenn Torsionskräfte an gegenüberliegenden Kartenkanten angreifen.

Im täglichen Gebrauch werden die anhand der Fig. 3a, 3b, 3c dargestellten Beanspruchungen meist nicht getrennt, sondern in einer Kombination auftreten. Als am wenigsten beanspruchte Bereiche, welche vorteilhafterweise für den Einbau des empfindlichen IC-Bausteins und der Kontaktflächen in Betracht kommen, haben sich die Eckbereiche der Karte herausgestellt. In diesen Bereichen sind erfahrungsgemäß die Belastungen der Karte am geringsten.

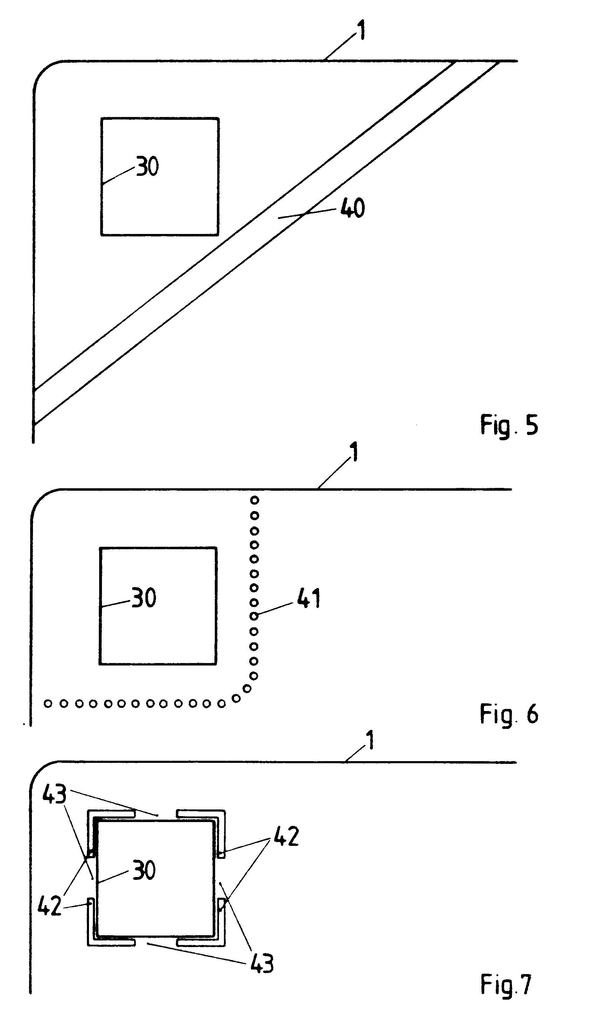

In Fig. 4 ist der Bereich, in dem der IC-Baustein mit den Leiterbahnen und Kontaktflächen vorzugsweise eingebaut werden sollte, durch eine Umrandung 30 dargestellt. In der Fig. sind auch die Biegespannungslinien 20, 21, 22 eingezeichnet, die bereits anhand der Fig. 3 erläutert wurden. Obwohl der IC-Bereich 30 geringeren Belastungen ausgesetzt ist als beispielsweise das Kartenzentrum, ist es trotzdem erforderlich, zusätzliche Maßnahmen zum Schutz des IC-Bausteins vorzusehen.

Der IC-Bereich 30 und der übrige Kartenbereich 31 werden hierzu mechanisch so gut wie möglich entkoppelt. Erfindungsgemäß geschieht dies durch eine sogenannte Sollbruchstelle, die das homogene Kartenmaterial in der Nähe des IC-Bereichs schwächt oder unterbricht. Dadurch werden auch die Biegespannungslinien 20, 21, 22 unterbrochen, so daß die aufgrund der Spannungen wirkenden Kräfte nur stark geschwächt auf den IC-Bereich 30 übertragen oder bei zu großen Kräften durch Deformation des Kartenaufbaus vom IC-Bereich ferngehalten werden. In Fig. 4 ist eine derartige Unterbrechung der Biegespannungslinien beispielhaft anhand der Linie 32 angedeutet.

Die teilweise Unterbrechung bzw. Schwächung der Karte wird üblicherweise so ausgelegt, daß im normalen Gebrauch, d. h. bei geringen mechanischen Beanspruchungen, die Sollbruchstelle nicht beansprucht wird. Die erfindungsgemäße Karte verhält sich also wie eine bisher gefertigte Karte ohne Sollbruchstelle. Erst bei Überschreitung einer bestimmten Biegespannung wirkt sich die eingebaute Sollbruchstelle aus, wobei sie die großen mechanischen Beanspruchungen vom IC-Bereich fernhält. Die Belastungsgrenze, ab der die Sollbruchstelle zur Wirkung kommen soll, kann in weiten Bereichen variiert und somit an die jeweiligen Bedingungen angepaßt werden. Die Bedingungen sind beispielsweise durch die mechanische Stabilität des IC-Bausteins gegeben, die wiederum von dessen Größe und Form abhängt.

Verschiedene Ausführungsformen der erfindungsgemäßen Sollbruchstelle bzw. -zone sind in den Fig. 5, 6, 7 dargestellt. Diese zeigen jeweils Ausschnitte einer Karte 1, bei der die Kontaktflächen und der IC-Baustein einen IC-Bereich 30 einschließen.

In Fig. 5 ist das homogene Kartenmaterial entlang einer Linie bzw. Zone 40, die schräg zum IC-Bereich verläuft, geschwächt und bildet daher eine Sollbruchstelle. Die Schwächung 40 kann im einfachsten Fall darin bestehen, daß die Karte in diesem Bereich dünner ausgebildet ist, beispielsweise durch eine Nut oder Prägung in der Kartenoberfläche. Anstatt den Kartenquerschnitt an einer oder auch an beiden Oberflächen zu reduzieren, kann die Karte auch in ihrem inneren Aufbau geschwächt werden. Dazu kann beispielsweise bei einer dreischichtigen Karte das Kartenkernmaterial entlang der Schwächungszone 40 ausgespart werden. Beim Laminierprozeß, bei dem im Normalfall Druck und Wärme angewendet werden, kann der ausgesparte Bereich des Kartenkerns durch erweichendes Kartenmaterial geringfügig zufließen, was bei der Bemessung der ausgesparten Zone zu berücksichtigen ist. Bei dieser Ausführungsform bilden die beiden Kartendeckfolien eine einheitliche, ebene Oberfläche, während die Sollbruchstelle im Inneren der Karte angeordnet ist.

Anstelle des Fortlassens von Kartenmaterial kann ggf. auch ein Material im Bereich der Zone 40 als Kartenkern oder als zusätzliche dünne Trennschicht verwendet werden, welches sich nicht oder nur schlecht mit den Deckfolien verbindet oder welches eine geringere Festigkeit als das restliche Kartenmaterial aufweist. Beispielsweise kann ein dünner Streifen aus Polyester oder Teflon die Verbindung zwischen den beiden Kartendeckfolien erheblich vermindern. Weiterhin kann auch ein Papierstreifen eingelagert werden, der sich zwar mit dem PVC-Material verbindet, aber in sich nachgiebig bleibt.

Fig. 6 zeigt ein weiteres Ausführungsbeispiel der Erfindung, bei dem der IC-Bereich 30 von einer gekrümmten Sollbruchstelle 41 umgeben ist. Diese kann im einfachsten Fall durch eine Perforation 41 des homogenen Kartenmaterials erreicht werden. Durch die lokale Wegnahme von Kartenmaterial wird die Steifigkeit der Karte entlang der Perforationslinie 41 vermindert, so daß bei starken Biegebelastungen der Karte diese längs der Perforationslinie 41 geknickt wird. Eine Übertragung der Biegespannung auf den empfindlichen IC-Bereich 30 wird damit soweit reduziert, daß der IC-Baustein sowie die Kontaktflächen und die Zuleitungen vor Zerstörung geschützt sind.

Schließlich zeigt die Fig. 7 eine Ausführungsform, die sich als besonders wirkungsvoll in der Praxis erwiesen hat. Kennzeichnend für diese Form ist, daß der IC-Bereich 30 durch nahe an diesem Bereich liegende Aussparungen 42 im Kartenmaterial weitgehend von mechanischen Belastungen der übrigen Karte entlastet wird. Im gezeigten Beispiel sind die Aussparungen 42 jeweils an den Ecken des IC-Bereichs angeordnet. Als Verbindung des IC-Bereichs mit der Karte verbleiben dadurch nur vier schmale Stege 43 aus Kartenmaterial. Da die Karten üblicherweise aus flexiblem Kunststoff hergestellt sind, bilden die Stege 43 eine elastische Halterung des IC-Bereichs und dienen zugleich als Sollbruchstelle. Durch die Anordnung der Aussparungen 42 an den Ecken des IC-Bereichs wird besonders die diagonale Biegung 22 der Karte, wie sie anhand der Fig. 3c erläutert wurde, vom IC-Bereich ferngehalten.

Abwandlungen der soeben beschriebenen Ausführungsform bestehen darin, daß anstelle der Aussparungen 42, die vorzugsweise 0,2 - 0,5 mm breit sind, lediglich Schnitte in der Karte vorgenommen werden. Weiterhin kann es je nach Belastung ausreichend sein, nur die zur Kartenmitte weisende Ecke des IC-Bereichs mit einer Aussparung oder einem Schnitt zu versehen, da sich herausgestellt hat, daß bei Entlastung dieser Ecke bereits der größte Teil der Biegespannungen vom IC-Bereich ferngehalten wird.

Den Verfahren zur Herstellung von Karten mit erfindungsgemäßen Sollbruchstellen ist gemeinsam, daß sie unabhängig vom Einbau des IC-Bausteins durchführbar sind. Dadurch können sowohl für die Ausbildung der Sollbruchstelle als auch für den IC-Einbau die jeweils günstigsten Bedingungen eingestellt werden.

Die Einbettung eines Papierstreifens oder eines sich nicht mit dem übrigen Kartenmaterial verbindenden Folienstreifens kann in der Art vorgenommen werden, daß das Kartenmaterial entsprechend der Schwächungszone ausgespart wird und an dessen Stelle der Papier- bzw. Folienstreifen eingesetzt wird. Die anschließende Laminierung der Karte kann insbesondere im Bereich des eingebetteten Streifens unter optimalen Laminierbedingungen durchgeführt werden, da der IC-Bereich, für den unter Umständen andere Bedingungen (z. B. geringerer Druck) erforderlich sind und der übrige Kartenbereich, der auch die Sollbruchstelle enthält, nicht überlappen.

Wenn anstelle des Papier- oder Folienstreifens die Aussparung in der Kartenkernschicht frei bleiben soll, ist darauf zu achten, daß bei der Heißlaminierung durch den normalerweise hohen Druck die Aussparung durch erwärmtes und damit fließfähiges Kartenmaterial nicht zufließt. Dieser Effekt kann durch entsprechende Dimensionierung einer oder mehrerer Aussparungen und auch der Laminierbedingungen berücksichtigt werden. Bei Verwendung von üblichen PVC-Folien und unter üblichen Laminierbedingungen werden mit Aussparungen von 0,5 - 2 mm Breite gute Ergebnisse erzielt. Wenn die Kartenschichten kalt verklebt werden, bleibt die Größe der Aussparungen beim Klebeprozeß unverändert.

Bei den übrigen vorgestellten Ausführungsformen wird die Sollbruchstelle durch Schwächung des homogenen Kartenaufbaus im Anschluß an den Einbau des IC-Bausteins in die Karte hergestellt. Wenn eine einheitliche Reduzierung des Kartenquerschnitts entlang einer Linie gewünscht wird, kann dies in einfachstem Fall durch eine Prägung oder die Fräsung einer Nut erreicht werden. Ausstanzungen und Schnitte werden ebenfalls erst nach erfolgtem IC-Einbau mit einem entsprechend geformten Werkzeug an der fertigen Karte ausgeführt.

Da die Herstellung von Kunststoffkarten üblicherweise in größeren "Mehrnutzen-Bogen", die beispielsweise 21 (3 x 7) Einzelkarten aufweisen, erfolgt, kann die Stanzung der Aussparungen, der Perforationslöcher oder der Schnitte vorzugsweise mit der Ausstanzung der Karten aus dem Bogen gemeinsam durchgeführt werden, so daß kein zusätzlicher Arbeitsgang erforderlich wird. Dieses Verfahren bietet den weiteren Vorteil, daß die Ausstanzungen bei unterschiedlichen Karten stets an derselben Stelle liegen, so daß enge Toleranzen eingehalten werden können.

**Patentansprüche**

1. Datenträger in Form einer flexiblen Standardkarte aus Kunststoff mit einem im Inneren des Kartenkörpers angeordneten IC-Baustein, der über Leiterbahnen mit Kontaktflächen verbunden ist, wobei die Kartenfläche zwei Bereiche aufweist und in einem dieser Bereiche der IC-Baustein liegt, welcher Bereich relativ zu dem die restliche Kartenfläche umfassenden Bereich klein ist, wobei die beiden Bereiche durch eine Sollbruchlinie voneinander getrennt sind,
dadurch gekennzeichnet,
daß der den IC-Baustein enthaltende Bereich und der andere Kartenbereich homogen aufgebaut sind und aus identischen Materialien ein und derselben Karte bestehen.

2. Datenträger nach Anspruch 1, dadurch **gekennzeichnet**, daß die Sollbruchstelle als Schwächung und/oder Unterbrechung im Kartenaufbau ausgeführt ist, welche die Festigkeit der Karte lokal vermindert.

3. Datenträger nach Anspruch 2, dadurch **gekennzeichnet**, daß die Schwächungen und/oder Unterbrechungen des Kartenaufbaus bei einer mindestens dreischichtigen Karte durch einen Hohlraum erreicht werden, der durch die Kartendeckschichten und eine Auussparung in der mittleren Kartenschicht gebildet ist.

4. Datenträger nach Anspruch 2 oder 3, dadurch **gekennzeichnet**, daß die Schwächungen und/oder die Unterbrechungen des Kartenaufbaus durch Einbettung eines Zusatzmaterials erfolgen, das geringere Festigkeitswerte aufweist als das es umgebende Kartenmaterial und/oder das sich nicht oder nur schlecht mit dem Kartenmaterial verbindet.

5. Datenträger nach Anspruch 2, dadurch **gekennzeichnet**, daß die Schwächungen und/oder Unterbrechungen des Kartenaufbaus durch teilweise Reduzierung des Kartenquerschnitts erfolgen.

6. Datenträger nach Anspruch 5, dadurch **gekennzeichnet**, daß die Reduzierung des Kartenquerschnitts durch Perforationslöcher, Aussparungen oder Schnittlinien erfolgt.

7. Datenträger nach Anspruch 5 dadurch **gekennzeichnet**, daß die Reduzierung des Kartenquerschnitts durch eine entlang einer Linie vorgesehene Verdünnung des Kartenmaterials erfolgt.

8. Datenträger nach Anspruch 2, dadurch **gekennzeichnet**, daß die Schwächungen und/oder Unterbrechungen dem Umriß des IC-Bausteins und den Kontaktflächen angepasst sind.

9. Verfahren zur Herstellung eines Datenträgers nach Anspruch 1 in Form einer flexiblen Standardkarte aus Kunststoff mit einem im Inneren des Kartenkörpers angeordneten IC-Baustein, der über Leiterbahnen mit Kontaktflächen verbunden ist, wobei die Kartenfläche zwei homogen aufgebaute Bereiche aufweist und in einem dieser Bereiche der IC-Baustein liegt, welcher Bereich relativ zu dem die restliche Kartenfläche umfassenden Bereich klein ist und wobei beide Bereiche durch eine Sollbruchlinie voneinander getrennt sind,
gekennzeichnet dadurch,
daß nach dem Laminieren des gegebenenfalls aus mehreren Schichten bestehenden Datenträgers dieser mittels Bearbeitung von außen zur Erzeugung von Sollbruchlinien in Form einer lokalen Materialschwächung in seinem Querschnitt reduziert wird.

10. Verfahren zur Herstellung eines Datenträgers nach Anspruch 9, dadurch **gekennzeichnet**, daß der Querschnitt des Datenträgers durch Schnitte, Stanzungen oder Perforationslöcher reduziert wird.

11. Verfahren zur Herstellung eines Datenträgers nach Anspruch 9, dadurch **gekennzeichnet**, daß der Querschnitt des Datenträgers durch eine Prägung reduziert wird.

**Claims**

1. A data carrier in the form of a flexible standard card made of plastic having an IC module disposed in the interior of the card body and connected via leads to contact surfaces, the card surface having two areas and the IC module being disposed in one of these areas, which area is small relative to the area including the remaining card surface, and the two areas being separated from each other by a predetermined breaking point, **characterized** in that the area containing the IC module and the other card area are of homogeneous structure and made of identical materials of one and the same card.

2. The data carrier of claim 1, **characterized** in that the predetermined breaking point is designed as a weakening and/or interruption in the card structure which locally reduces the rigidity of the card.

3. The data carrier of claim 2, **characterized** in that the weakenings and/or interruptions in the card structure are obtained in an at least three-layer card by a cavity formed by the card cover layers and a recess in the middle card layer.

4. The data carrier of claim 2, **characterized** in that the weakening's and/or interruptions in the card structure are obtained by embedding an additional material having lower rigidity values than the surrounding card material and/or not connecting, or only connecting poorly, with the card material.

5. The data carrier of claim 2, **characterized** in that the weakenings and/or interruptions in the card structure are obtained by partly reducing the cross section of the card.

6. The data carrier of claim 5, **characterized** in that the reduction in the cross section of the card is obtained by perforations, recesses or cutting lines.

7. The data carrier of claim 5, **characterized** in that the reduction in the cross section of the card is obtained by making the card material thinner along a line.

8. The data carrier of claim 2, **characterized** in that the weakenings and/or interruptions are adapted to the outline of the IC module and to the contact surfaces.

9. A method for producing the data carrier of claim 1 in the form of a flexible standard card made of plastic having an IC module disposed in the interior of the card body and connected via leads to contact surfaces, the card surface having two homogeneously constructed areas and the IC module being disposed in one of these areas, which area is small relative to the area including the remaining card surface, and the two areas being separated from each other by a predetermined breaking point, **characterized** in that after the data carrier optionally comprising a plurality of layers has been laminated it is reduced in its cross section by being worked from outside to produce predetermined breaking lines in the form of a local weakening of material.

10. The method for producing a data carrier of claim 9, **characterized** in that the cross section of the data carrier is reduced by cuts, punchings or perforations.

11. The method for producing a data carrier of claim 9, **characterized** in that the cross section of the data carrier is reduced by a stamping.

**Revendications**

1. Support de données ou d'information en forme de carte normalisée flexible en matière plastique, muni d'un composant à circuit intégré disposé à l'intérieur du corps de carte qui est relié à des surfaces de contact par des pistes conductrices, la surface de carte présentant deux zones, le composant à circuit intégré étant disposé dans l'une de ces zones, cette zone étant relativement petite par rapport à la zone couvrant le reste de la surface de carte, support dans lequel, de plus, les deux zones sont séparées l'une de l'autre par une ligne servant de rupture, caractérisé en ce que la zone comportant le composant à circuit intégré et l'autre zone de la carte sont de construction homogène et sont composées en un matériau identique constitutif d'une et même carte.

2. Support d'information selon la revendication 1, caractérisé en ce que l'emplacement servant de rupture est réalisé en forme d'une moindre solidité ou d'une discontinuité dans la construction de la carte augmentant localement la fragilité de la carte.

3. Support d'information suivant la revendication 2, caractérisé en ce que les fragilités ou affaiblissements et/ou les discontinuités dans la construction de la carte, dans le cas d'une carte à au moins trois couches, sont obtenus au moyen d'un espace vide constitué par les couches de couverture de la carte et un évidement dans la couche médiane de la carte.

4. Support d'information suivant la revendication 2 ou 3, caractérisé en ce que les fragilités locales et/ou les discontinuités dans la construction de la carte sont obtenus suite à l'incorporation dans la masse d'un matériau supplémentaire ayant une moindre valeur de résistance mécanique que celle du matériau de carte qui l'entoure et/ou qui présente peu ou pas de liaison avec le matériau de la carte.

5. Support d'information suivant la revendication 2, caractérisé en ce que les fragilités et/ou les discontinuités dans la construction de la carte sont réalisés par une réduction partielle de la section transversale de la carte.

6. Support d'information suivant la revendication 5, caractérisé en ce que la réduction de la section transversale de la carte est obtenue au moyen de trous de perforation, par des évidements ou par des lignes de coupure.

7. Support d'information suivant la revendication 5, caractérisé en ce que la réduction de la section transversale de la carte est obtenue au moyen d'une réduction prévue le long d'une ligne de l'épaisseur du matériau de la carte.

8. Support d'information suivant la revendication 2, caractérisé en ce que les fragilités et/ou les discontinuités sont adaptées au contour externe du composant à circuit intégré.

9. Procédé de fabrication d'un support d'information suivant la revendication 1, en forme de carte normalisée flexible en matière plastique, muni d'un composant à circuit intégré disposé à l'intérieur du corps de carte qui est relié à des surfaces de contact par des pistes conductrices, la surface de carte présentant deux zones d'une construction homogène, le composant à circuit intégré étant disposé dans l'une de ces zones, cette zone étant relativement petite par rapport à la zone couvrant le reste de la surface de carte, support dans lequel, de plus, les deux zones sont séparées l'une de l'autre par une ligne servant de rupture, caractérisé en ce que, après le laminage du support d'information éventuellement composé de plusieurs couches, la section transversale du support est réduite par usinage appliqué extérieurement pour la réalisation de lignes destinées à la rupture en forme d'un affaiblissement local du matériau.

10. Procédé de fabrication d'un support d'information selon la revendication 9, caractérisé en ce que la section transversale du support d'information est réduite au moyen de coupures, découpes ou de perforations.

11. Procédé de fabrication d'un support d'information selon la revendication 9, caractérisé en ce que la section transversale du support d'information est réduite par estampage.

Fig. 1

Fig. 2

Fig. 4

Fig. 3a

Fig. 3b

Fig. 3c

Fig. 5

Fig. 6

Fig.7